# DEMANDE DE BREVET EUROPEEN

(11) **EP 4 428 207 A2**
(43) Date de publication de la demande: **11.09.2024**
(21) Numéro de dépôt: 24171491.4
(22) Date de dépôt: 24.06.2015
(51) Int. Cl.: C09D 11/328

(54) **COMPOSITION D'ENCRE POUR L'IMPRESSION PAR JET CONTINU DEVIE NOTAMMENT POUR DES MARQUAGES DE SECURITE**

(30) Priorité: 26.06.2014 FR 1455990
(62) Demande divisionnaire de: 15173635.2
(71) Demandeur: Markem-Imaje Holding, 26500 Bourg-Les-Valence (FR)
(72) Inventeur: INSULAIRE, Mickaelle, 26000 Valence (FR); GUILLOT-PATRIQUE, Grégory, 38470 Vinay (FR)
(74) Mandataire: Regimbeau

(57) **Abrégé**

Composition d'encre pour l'impression par jet continu dévié, liquide à la température ambiante, comprenant :
a) un solvant comprenant, de préférence constitué par, un ou plusieurs composé(s) solvant(s) organiques, et éventuellement de l'eau;
b) un liant, comprenant au moins une résine liante ;
c) au moins un plastifiant de ladite résine liante ;
d) au moins un colorant qui appartient à la famille des colorants anthraquinones ;
e) éventuellement, au moins un ou plusieurs autres colorant(s) et/ou pigment(s) qui n'appartiennent pas à la famille des colorants anthraquinones.

Procédé de marquage d'un substrat, support ou objet utilisant ladite composition d'encre.

Substrat, support, ou objet pourvu d'un marquage obtenu par séchage, et/ou absorption de ladite composition d'encre.

Utilisations de la combinaison d'un liant comprenant au moins une résine liante, d'au moins un plastifiant de ladite résine liante et d'au moins un colorant appartenant à la famille des colorants anthraquinones, dans une composition d'encre pour l'impression par jet continu dévié, liquide à la température ambiante.

## Description

### DOMAINE TECHNIQUE

L'invention concerne une composition d'encre dont les propriétés sont particulièrement bien adaptées au marquage ou à l'impression par jet de liquide, et tout particulièrement au marquage par jet d'encre continu dévié.

La composition d'encre selon l'invention peut être utilisée pour le marquage de substrats, supports et objets de toutes sortes.

La composition d'encre selon l'invention convient notamment au marquage de substrats, supports, et objets en polymères organiques, en particulier en polymères thermoplastiques (« matières plastiques »), tels que les polyoléfines comme les polyéthylènes (PE) ou les polypropylènes (PP), ou encore les poly(téréphtalate d'éthylène) (PET). La composition d'encre selon l'invention convient particulièrement bien au marquage de bouteilles, flacons ou bouchons en polymères organiques, notamment en polyoléfines, comme les polyéthylènes ou polypropylènes.

La composition d'encre selon l'invention permet d'obtenir des marquages que l'on peut qualifier de marquages de sécurité, c'est-à-dire des marquages qui restent permanents même après des tentatives d'effacement de ces marquages, par exemple à des fins frauduleuses, par dissolution avec un solvant. En d'autres termes, la composition d'encre selon l'invention permet d'obtenir des marquages indélébiles.

### ÉTAT DE LA TECHNIQUE ANTÉRIEURE

L'impression par jet d'encre est une technique bien connue, qui permet l'impression, le marquage, ou la décoration de toutes sortes d'objets, à grande vitesse, et sans contact de ces objets avec le dispositif d'impression, de messages variables à volonté, tels que codes barres, dates limites de vente, etc. et ce, même sur des supports non plans.

Les techniques d'impression par jet d'encre se divisent en deux grands types, à savoir : la technique dite de la « goutte à la demande » (« *Drop on Demand* », ou « *DOD* » en langue anglaise), et la technique dite du « jet continu » (« *Continuous Ink Jet* » ou « *CIJ* » en langue anglaise).

Nous nous intéresserons plus particulièrement à cette dernière technique, plus précisément à la technique du jet continu dévié.

La projection par jet continu dévié consiste à envoyer sous pression de l'encre dans une cavité contenant un cristal piézo-électrique, d'où l'encre s'échappe par un orifice (buse) sous la forme d'un jet.

Le cristal piézo-électrique, vibrant à une fréquence déterminée, provoque des perturbations de pression dans le jet d'encre, qui oscille et se brise progressivement en gouttes ou gouttelettes sphériques. Une électrode, placée sur le trajet du jet, là où il se brise, permet de donner à ces gouttes une charge électrostatique, si l'encre est conductrice. Les gouttes ainsi chargées sont défléchies dans un champ électrique et permettent l'impression. Les gouttes non chargées, donc non défléchies, sont récupérées dans une gouttière où l'encre est aspirée, puis recyclée vers le circuit d'encre.

Ce type de projection d'encre par jet assure un marquage sans contact à grande vitesse de défilement sur des objets non nécessairement plans et avec la possibilité de changer de message à volonté.

La technique est particulièrement adaptée au marquage et à l'identification (dates de péremption, numéros de série, de lot, de codes barres etc.) de produits industriels sur les chaînes de production.

Les compositions d'encre, aptes à la projection, impression, par la technique du jet continu dévié, doivent satisfaire à un certain nombre de critères inhérents à cette technique, relatifs, entre autres, à la viscosité, la conductivité électrique, la solubilité dans un solvant pour le nettoyage, la compatibilité des ingrédients, le mouillage correct des supports à marquer, etc.

Des critères particuliers et importants auxquels doivent satisfaire les compositions d'encre pour l'impression par la technique du jet continu dévié, proviennent d'une part du fait que la consommation d'encre est faible lorsque le nombre de caractères imprimés par message est faible, et d'autre part du fait que le jet est continu et que l'encre recircule de nombreuses fois avant d'être projetée. De ce fait, l'encre est en contact avec l'air ambiant lors de l'aspiration des gouttes non défléchies, et elle peut être amenée à absorber l'humidité ambiante ou à réagir avec l'oxygène de l'air, et elle peut s'en trouver ainsi modifiée.

Malgré cette situation, l'encre devra conserver ses propriétés essentielles aussi bien durant son stockage, que lors de sa circulation dans l'imprimante.

Enfin, ces encres doivent sécher rapidement, être capables de passer par la buse sans la boucher, avec une grande stabilité d'orientation du jet tout en permettant un nettoyage facile de la tête d'impression.

Les ingrédients qui composent les encres actuelles, pour le jet d'encre de type jet continu dévié, sont des produits organiques ou minéraux ; il s'agit de matières colorantes, telles que des colorants ou pigments, de résines ou liants, dans un ou des solvant(s) plus ou moins volatil(s) ou dans l'eau, éventuellement d'un ou de sel(s) de conductivité, ainsi que d'additifs divers.

Le ou les sel(s) de conductivité éventuel(s) apporte(nt) à l'encre la conductivité nécessaire à la déviation électrostatique. On pourra à ce sujet se reporter au document US-A-4,465,800.

Les additifs comprennent les dispersants qui permettent la dispersion des pigments, les surfactants qui modifient le pouvoir mouillant ou pénétrant de l'encre (US-A-5,395,431), en particulier ceux qui modifient ou régulent la tension superficielle statique ou dynamique, tels que le Fluorad^{®} FC 430 de la Société 3M^{®}, les agents qui inhibent la corrosion induite par les sels qui apportent la conductivité mentionnés plus haut (voir documents EP-A-0 510 752, US-A-5,102,458), ou encore les additifs qui protègent l'encre contre les proliférations de bactéries et d'autres micro-organismes : il s'agit de biocides, bactéricides, fongicides et autres, particulièrement utiles dans les encres contenant de l'eau, les tampons régulateurs de pH (voir EP-A-0 735 120), les agents anti-mousse.

Les matières colorantes sont appelées « colorants ou pigments », selon qu'elles sont respectivement solubles ou insolubles dans le solvant utilisé.

Les pigments, par nature insolubles, sont donc dispersés et peuvent être opaques ou non. Ils apportent à l'encre sa couleur, son opacité, ou des propriétés optiques particulières, telles que la fluorescence (cf. brevets ou demandes de brevets US-A-4,153,593, US-A-4,756,758, US-A-4,880,465, EP-A-0 289 141, US-A-5,395,432, GB-A-2 298 713). Dans certains cas, les colorants apportent eux aussi suffisamment de conductivité à l'encre pour qu'il n'y ait pas besoin d'ajouter un sel de conductivité. Les colorants connus sous la dénomination C. I. Solvent Black 27, 29, 35 et 45 sont dans ce cas.

Le ou les liant(s) ou résine(s) est(sont) généralement pour la plupart un(des) composé(s) solide(s) et polymérique(s) et leur choix est dicté par leur solubilité dans les solvants sélectionnés et par leur compatibilité avec les colorants et les autres additifs, mais aussi et surtout en fonction des propriétés qu'ils apportent au film d'encre, une fois sec (voir brevets ou demandes de brevets US-A-4,834,799, GB-A-2 286 402, US-A-5,594,044, US-A-5,316,575, WO-A-96/23844, WO-A-95/29287).

Leur fonction première est d'apporter à l'encre l'adhérence sur le maximum de supports ou sur des supports spécifiques, par exemple non poreux. Ils permettent aussi de donner à l'encre la viscosité adéquate pour la formation des gouttes à partir du jet et ils apportent à l'encre, ou plutôt au marquage obtenu, l'essentiel de ses propriétés de résistance aux agressions physiques et/ou chimiques, en particulier la résistance au frottement, au décollement par un ruban adhésif (« Scotch »^{®}), ou la résistance à d'autres solvants usuels tels que l'alcool éthylique.

Le solvant de ces encres est constitué le plus fréquemment d'un mélange comprenant, d'une part, une quantité majoritaire de solvants volatils et peu visqueux, afin de permettre le séchage très rapide des marquages et d'ajuster la viscosité à la valeur souhaitée, par exemple de 2 à 10 mPa.s et, d'autre part, des solvants plus visqueux et moins volatils à séchage plus lent, en une quantité moindre, pour éviter le séchage de l'encre dans la buse lors des phases d'arrêt de l'appareil d'impression (cf. brevets ou demandes de brevets US-A-4,155,767, WO-A-92 14794, WO-A-92 14 795 et US-A-4,260,531).

Les solvants volatils utilisés le plus souvent sont les alcools, les cétones ou les esters de bas poids moléculaire, comme cela est indiqué dans les brevets US-A-4,567,213, et US-A-5,637,139. Parmi ces solvants, on peut citer essentiellement le méthanol, l'éthanol, les 1- et 2-propanol, l'acétone, la méthyl éthyl cétone (« MEK »), la méthyl-isobutyl cétone, l'acétate d'éthyle, et le tétrahydrofuranne.

Les solvants moins volatils ayant notamment une fonction de retardateur de séchage sont le plus souvent les cétones, telles que la cyclohexanone, les éthers de glycol, cités dans les documents US-A-4,024,096 et US-A-4,567,213, les éthers et les acétals, tels que le furanne ou le dioxanne, mentionnés dans le document US-A-4,155,767, le diméthyl formamide ou le diméthylsulfoxyde (US-A-4,155,895), les lactones (EP-A-0 034 881), la N-méthyl pyrrolidone (EP-A-0 735 120), les glycols (WO-A-96 23844), et même des hydrocarbures aliphatiques (US-A-4,166,044) ou encore l'eau, seule ou en combinaison avec d'autres solvants, cités plus haut, on se référera, à ce propos, aux documents US-A-4,153,593, GB-A-2 277 094 et FR-A-2 460 982.

De manière générale, les solvants principaux ou majoritaires des encres pour la projection par jet continu dévié doivent répondre à un certain nombre de critères, en particulier :
- leur volatilité doit être suffisante pour que l'encre sèche rapidement sur le support à marquer, mais pas trop grande, afin de ne pas s'évaporer trop vite dans l'imprimante, en particulier lors des phases d'arrêt ;
- leur pouvoir solvant, vis-à-vis des liants de l'encre, des colorants ou des dispersions pigmentaires et vis-à-vis des supports à imprimer, doit permettre de conférer à l'encre sèche, une bonne adhérence ;
- leurs effets sur la santé des personnes, à savoir leurs toxicité, nocivité, caractère irritant et inflammabilité, doivent être réduits ;
- ils doivent permettre de maintenir stérile une encre éventuellement destinée à être ingérée ;
- enfin, ils doivent avoir la capacité de maintenir dissoutes et dissociées les espèces ioniques telles que les sels qui confèrent à l'encre sa conductivité électrique.

Par ailleurs, on sait que la traçabilité de produits tels que les produits alimentaires, pharmaceutiques ou médicaux nécessite que des informations diverses, spécifiques et variables soient imprimées sur ces produits et/ou l'emballage de ces produits.

Le cas particulier des produits dont l'origine et la traçabilité de la production doivent être garanties pose un problème particulièrement difficile à résoudre. En effet, les marquages doivent alors être permanents et en particulier doivent résister à toutes sortes de liquides pour ne pas être effaçables.

En particulier, la date limite d'utilisation ne doit pas pouvoir être effacée, par exemple par aspersion avec un solvant, pour ne pas être modifiée par des acteurs peu scrupuleux à des fins frauduleuses.

La technologie du jet d'encre continu dévié est avec le marquage par laser CO₂ la technique la plus appropriée pour le marquage à grande vitesse, notamment sur des surfaces courbes, d'une information variable.

Pour de telles applications, l'encre pour l'impression par jet continu dévié et le marquage déposé doivent répondre à des exigences particulières, qui sont notamment les suivantes :
- l'encre doit sécher très rapidement lorsque les cadences de production sont importantes ;
- le marquage doit résister à la manipulation par l'utilisateur, par exemple le marquage doit résister à la manipulation par le consommateur pendant toute la durée de la consommation du contenu de l'emballage, tel qu'une bouteille ;
- le marquage doit résister au frottement ;
- le marquage doit être adhérent, et surtout et avant tout le marquage ne doit pas pouvoir être effacé, par aspersion avec un solvant. En d'autres termes, le marquage obtenu doit être permanent, c'est à dire qu'il doit rester lisible même après une tentative d'efficacement par dissolution avec un solvant, ou plus simplement il doit résister à l'effacement par dissolution avec un solvant.

Il existe donc un besoin pour une composition d'encre pour l'impression par la technique du jet continu dévié qui donne des marquages présentant notamment une résistance à l'effacement par dissolution avec un solvant améliorée, par rapport aux compositions d'encre connues, en particulier sur les substrats, tels que des emballages, en polymères organiques, notamment, en matières plastiques, et en particulier sur les substrats en polyoléfines, par exemple en polyéthylènes ou polypropylènes.

En particulier, il existe un besoin pour une telle composition d'encre pour l'impression par la technique du jet continu dévié qui donne des marquages qui résistent à l'effacement par dissolution avec un solvant déjà peu de temps après la projection de l'encre, à bref délai après l'impression.

Le but de l'invention est de fournir une composition d'encre convenant en particulier pour l'impression par jet continu dévié, qui réponde, entre autres, à l'ensemble des besoins, exigences et critères indiqués plus haut, et qui ne présente pas les inconvénients, limitations, défauts et désavantages des compositions d'encre de l'art antérieur, et qui surmonte les problèmes des compositions d'encre de l'art antérieur.

### EXPOSÉ DE L'INVENTION

Ce but et d'autres encore sont atteints, conformément à l'invention, par une composition d'encre pour l'impression par jet continu dévié, liquide à la température ambiante, comprenant :
a) un solvant comprenant, de préférence constitué par, un ou plusieurs composé(s) solvant(s) organiques, et éventuellement de l'eau;
b) un liant, comprenant au moins une résine liante ;
c) au moins un plastifiant de ladite résine liante ;
d) au moins un colorant qui appartient à la famille des colorants anthraquinones ;
e) éventuellement, au moins un ou plusieurs autres colorant(s) et/ou pigment(s) qui n'appartiennent pas à la famille des colorants anthraquinones.

Par « température ambiante », on entend généralement une température de 5°C à 30°C, de préférence de 10°C à 25°C, de préférence encore de 15°C à 24°C, mieux de 20°C à 23°C. Il est bien entendu que l'encre est liquide à la pression atmosphérique.

La composition d'encre selon l'invention est définie par un ensemble de caractéristiques spécifiques qui n'a jamais été décrit, ni suggéré, dans l'art antérieur.

Selon une caractéristique fondamentale, la composition d'encre selon l'invention comprend une combinaison de composés spécifiques qui n'a jamais été décrite, ni suggérée, dans l'art antérieur.

En particulier, la composition d'encre selon l'invention comprend la combinaison d'une résine liante, d'un plastifiant de cette résine liante et d'un colorant très spécifique appartenant à la famille des colorants anthraquinones qui n'a jamais été décrite ni suggérée dans l'art antérieur.

La composition d'encre selon l'invention répond entre autres aux besoins, critères et exigences mentionnées plus haut, et apporte une solution aux problèmes des compositions d'encre de l'art antérieur.

Selon l'invention, il a été notamment constaté de manière surprenante que la combinaison spécifique dans l'encre selon l'invention d'une résine liante, d'un plastifiant de cette résine liante et d'un un colorant très spécifique appartenant à la famille des anthraquinones permettait d'obtenir des compositions d'encre dans lesquelles le colorant de la famille des colorants anthraquinones, et seulement ce colorant, migre dans le support, substrat à marquer, en particulier dans les supports en polymères organiques, notamment en matières plastiques (polymères thermoplastiques), et de préférence en polyoléfines, par exemple en polyéthylènes ou en polypropylènes.

Cette migration est rapide. En effet, elle se produit généralement en quelques heures, par exemple en moins de 24 heures, si bien qu'à bref délai après la projection de la composition d'encre selon l'invention sur un support, substrat, des marquages résistants en particulier à l'effacement par dissolution avec un solvant sont obtenus.

Ces marquages restent donc parfaitement lisibles, même après dissolution de l'encre du marquage par un solvant au contraire des marquages qui ne comprennent pas la combinaison spécifique de composants de l'encre selon l'invention (voir exemples).

En d'autres termes, les marquages obtenus avec la composition d'encre selon l'invention sont indélébiles sous l'action des solvants, notamment organiques.

La résistance des marquages obtenus avec les compositions d'encre selon l'invention, en particulier la résistance à l'effacement par dissolution avec un solvant est particulièrement élevée sur les supports en polymères organiques, notamment sur les matières plastiques (polymères thermoplastiques), et en particulier sur les polyoléfines, par exemple les polyéthylènes ou les polypropylènes.

Il a aussi été constaté de manière surprenante que, dans la composition d'encre selon l'invention comprenant un colorant de type anthraquinone ayant tendance à migrer dans le support, ce colorant de type anthraquinone ne migrait pas indéfiniment dans le temps, et de ce fait, une résistance, en particulier à l'effacement par dissolution avec un solvant, est conférée au marquage sur une longue durée, tandis que cette résistance est acquise à bref délai après la projection de l'encre, l'impression.

Il ne découlait pas de manière évidente des compositions d'encre connues que la combinaison d'une résine liante, d'un plastifiant de cette résine liante et d'un colorant très spécifique appartenant à la famille des colorants anthraquinones, pouvait procurer aux marquages une telle résistance, une telle indélébilité.

Ainsi, la demande de brevet US-A1-2008/0066239 (US-B2-7,520,926) décrit des compositions d'encre pour l'impression par jet d'encre qui comprennent un ou plusieurs solvants organiques, une ou plusieurs résines liantes et un colorant de type quinone, c'est-à-dire naphtaquinone ou anthraquinone insoluble dans l'eau.

Ce document, et en particulier les formulations des exemples de ce document, ne décrivent ni ne suggèrent une composition d'encre comprenant la combinaison d'une résine liante, d'un plastifiant de cette résine liante et d'un colorant très spécifique appartenant à la famille des colorants anthraquinones. Il n'y a en outre aucune indication dans ce document sur les propriétés inattendues de migration des colorants de la famille des colorants anthraquinones, notamment dans les supports en polymères organiques, en particulier dans les supports en matières plastiques (polymères thermoplastiques), qui sont observées dans les compositions d'encre selon l'invention.

Enfin, il n'y aucune mention ni aucune suggestion dans ce document qu'une composition d'encre comprenant la combinaison d'une résine liante, d'un plastifiant de cette résine liante et d'un colorant très spécifique appartenant à la famille des colorants anthraquinones pourrait conduire à des marquages très résistants, en particulier à l'effacement par dissolution avec un solvant.

En effet, selon un aspect fondamental de l'invention, les encres selon l'invention donnent des marquages qui restent lisibles même après dissolution par un solvant, cette dissolution pouvant de manière surprenante avoir lieu peu de temps après l'impression, par exemple seulement quelques heures après l'impression.

Avantageusement, la résine liante peut être choisie parmi les résines (méth)acryliques, vinyliques, cétoniques, hydroxyaromatiques, cellulosiques, styrèniques, époxy, polyuréthanes, styrène-acrylates, alcoxysilanes, esters, et les combinaisons de deux ou plus de celles-ci.

De préférence, la résine liante est choisie parmi les résines cellulosiques, polyuréthanes, vinyliques, et les combinaisons de deux ou plus de celles-ci.

Les résines cellulosiques peuvent être des résines d'acétobutyrate de cellulose. Un exemple d'une résine d'acétobutyrate de cellulose est la résine disponible auprès de la société Eastman^{®} sous la dénomination CAB553.04.

Par résines polyuréthanes, on entend les résines issues de la polycondensation de polyalcools et de polyisocyanates. Un exemple d'une résine liante polyuréthane est la résine disponible auprès de la société Ernisunion^{®} sous la dénomination Surkopak^{®} 5311.

Un exemple d'une résine liante vinylique est la résine disponible auprès de la société Wacker^{®} sous la dénomination Vinnol E1545M^{®}.

Avantageusement, le liant représente de 0,1 à 50% en poids, de préférence de 1% à 45% en poids, de préférence encore de 5% à 30% en poids, mieux de 10% à 20% en poids, du poids total de la composition d'encre selon l'invention.

De manière particulièrement préférée, le liant peut être constitué par une résine cellulosique, telle qu'une résine d'acétobutyrate de cellulose, représentant de 0,1 à 15% en poids, de préférence de 1 à 10% en poids du poids total de la composition d'encre selon l'invention.

Le plastifiant peut être choisi parmi tous les plastifiants connus de l'homme du métier. Le plastifiant est choisi en fonction du liant utilisé comprenant une ou plusieurs résine(s) liante(s).

On peut citer, en tant que plastifiant, par exemple, les polyuréthanes thermoplastiques, les phtalates, les adipates, les esters tels que les citrates, comme les citrates de trialkyle, par exemple le citrate de tributyle, les phosphates d'alkyle, le glycérol, l'acide lactique, l'acide oléique, le polypropylène glycol, les triglycérides d'acides gras, l'acide lévulinique ; les carbamates ou résines carbamiques ; et leurs mélanges.

Par polyuréthane thermoplastique, on entend les polyuréthanes issus de la polycondensation de polyalcools et de polyisocyanates.

Il est à noter que les plastifiants polyuréthanes thermoplastiques sont bien sûr différents des résines liantes polyuréthanes et ne doivent pas être confondus avec celles-ci.

Ainsi la température de transition vitreuse Tg est-elle généralement supérieure à la température ambiante (TA) pour les résines liantes, tandis qu'elle est généralement inférieure à la température ambiante pour les plastifiants.

La masse moléculaire est généralement élevée pour les résines liantes (par exemple supérieure à 10000 Da), tandis que la masse moléculaire est généralement plus faible pour les plastifiants (par exemple inférieure à 10000 Da).

Un exemple d'un tel plastifiant polyuréthane est la résine polyuréthane disponible sous la dénomination Unithane^{®} 672S65 auprès de la société Ernisunion^{®}.

Un exemple d'une telle résine carbamique plastifiante est la résine carbamique disponible sous la dénomination Resamine^{®} HF480 auprès de la société Allnex^{®}.

De préférence, le plastifiant est choisi parmi les polyuréthanes thermoplastiques, les esters, les carbamates, et leurs mélanges.

Le ou les plastifiant(s) est(sont) généralement présent(s) à raison d'au moins 0,05% en poids, de préférence de 0,1% à 20% en poids, du poids total de la composition d'encre. Le colorant appartenant à la famille des anthraquinones peut être choisi parmi le C. I. Solvent Blue 36, le C.I.Solvent Blue 45, le C. I. Solvent Blue 104, et leurs mélanges.

Avantageusement, le colorant appartenant à la famille des colorants anthraquinones est le C.I. Solvant Blue 104.

Avantageusement, la composition d'encre selon l'invention comprend de 0,01% à 5% en poids, de préférence de 0,01% à 2% en poids du au moins un colorant appartenant à la famille des anthraquinones.

La composition d'encre selon l'invention comprend une très faible quantité d'eau, inférieure généralement à 10% en poids, de préférence inférieure à 5%, de préférence encore, inférieure à 1% en poids, par rapport au poids total de la composition d'encre.

La composition d'encre selon l'invention peut même être considérée comme étant essentiellement exempte d'eau (0% d'eau).

En fait, l'eau présente n'est que l'eau apportée se trouvant à titre d'impureté dans les divers composants de l'encre. Plus le degré de pureté des composants choisis sera grand, plus la teneur en eau sera faible.

La faible teneur ou absence d'eau dans la composition d'encre selon l'invention favorise la formation du film d'encre lorsque les liants et autres colorants de la composition sont insolubles dans l'eau, améliorant ainsi les propriétés de résistance et d'adhérence de l'encre.

Dans la composition selon l'invention, le solvant représente généralement au moins 20% en poids du poids total de la composition d'encre, de préférence le solvant représente de 30% à 90% en poids, de préférence encore de 60% à 80% en poids, du poids total de la composition d'encre.

Le solvant comprend, de préférence est constitué par, un ou plusieurs composé(s) solvant(s) organique(s) et éventuellement de l'eau à la condition que la quantité d'eau respecte les conditions indiquées plus haut.

Avantageusement, le ou lesdits composé(s) solvant(s) organique(s) comprend(comprennent) une proportion majoritaire en poids, par rapport au poids total du solvant (50% en poids du poids total du solvant ou plus, voire jusqu'à 100% en poids du poids total du solvant), d'un ou plusieurs composé(s) solvant(s) organique(s) volatil(s), et une proportion minoritaire en poids, par rapport au poids total du solvant, d'un ou plusieurs composé(s) solvant(s) organique(s) non volatil(s).

De préférence, le solvant est constitué par un ou plusieurs composé(s) solvant(s) organique(s) volatil(s).

Par « composé solvant organique volatil », on entend généralement que ce composé a une vitesse d'évaporation supérieure à 0,5 sur l'échelle où l'acétate de butyle a une vitesse d'évaporation égale à 1.

Le ou lesdits composé(s) solvant(s) organique(s) faisant partie du solvant est(sont) choisi(s), par exemple, parmi les alcools, en particulier, les alcools de bas poids moléculaire, par exemple, les alcools aliphatiques tels que l'éthanol ; les cétones de préférence de bas poids moléculaire ; les éthers d'alkylène glycols ; les esters d'alkylène glycols et les esters d'éthers d'alkylène glycols, tels que les acétates ; le diméthyl formamide ; la N-méthyl pyrrolidone ; les acétals ; les esters ; les éthers linéaires ou cycliques ; les hydrocarbures aliphatiques, cycliques ou linéaires ; les hydrocarbures aromatiques ; et les carbonates tels que le carbonate de propylène, le carbonate d'éthylène et les diméthyl- et diéthyl-carbonates ; et leurs mélanges.

De préférence, ce ou ces composé(s) solvant(s) possède(nt) la propriété de dissoudre les autres ingrédients de l'encre, notamment le liant, les matières colorantes, les additifs, etc.

Les alcools seront, de préférence, choisis parmi les alcools aliphatiques linéaires ou ramifiés de 1 à 8 atomes de carbone, tels que le méthanol, l'éthanol, le propanol-1, le propanol-2, le n-butanol, le butanol-2, le tert-butanol, etc.

Les cétones seront, de préférence, choisies parmi les cétones de 3 à 10 atomes de carbone, telles que l'acétone, la butanone (méthyl-éthyl-cétone), la pentanone-2 (méthyl-propyl-cétone), la méthyl-3 butanone-2 (méthyl-isopropyl cétone) et la méthyl-4 pentanone-2 (méthyl-isobutyl-cétone).

Les éthers d'alkylène glycols sont choisis de préférence parmi les éthers mono-alkyliques (groupe alkyle en C1 à C6) ou dialkyliques (groupes alkyle en C1 à C6) d'alkylène glycol comprenant 1 à 10 atomes de carbone dans la chaîne alkylène, de préférence il s'agit d'éthers d'éthylène ou de propylène glycol, tels que le méthoxy-propanol.

Les esters d'alkylène glycols et les esters d'éthers d'alkylène glycols sont choisis, de préférence, parmi les esters de ceux-ci avec les acides carboxyliques, aliphatiques saturés de 1 à 6 atomes de carbone, tels que l'acide formique, l'acide acétique, l'acide propionique, l'acide butyrique, l'acide valérique et l'acide caproïque.

On peut citer, par exemple, l'acétate de méthoxypropyle, l'acétate de butyldiglycol, etc.

Les esters sont choisis, de préférence, parmi les esters de faible masse moléculaire tels que les formiates, les acétates, les propionates ou butyrates d'alcools de 1 à 10 atomes de carbone.

Les acétals sont choisis, de préférence, parmi les acétals de faible masse moléculaire tels que l'éthylal et le méthylal.

Les éthers sont choisis, de préférence, parmi les éthers de faible masse moléculaire comme le dioxolanne ou le tétrahydrofuranne.

L'homme du métier pourra facilement identifier parmi ces composés solvants ceux qui sont volatils et ceux qui sont non volatils.

Un solvant préféré selon l'invention comprend une quantité majoritaire en poids par rapport au poids total du solvant, de préférence est constitué, d'un ou plusieurs composé(s) solvant(s) choisi(s) parmi les cétones de 3 à 10 atomes de carbone, telles que l'acétone, la butanone (méthyl-éthyl-cétone ou MEK), la pentanone-2 (méthyl-propyl-cétone), la méthyl-3 butanone-2 (méthyl-isopropylcétone), et la méthyl-4 pentanone-2 (méthyl-isobutyl-cétone ou MIK).

Un solvant particulièrement préféré comprend une quantité majoritaire en poids par rapport au poids total du solvant de MEK, de préférence est constitué par de la MEK.

Ce solvant préféré peut comprendre en outre un ou plusieurs autres composé(s) solvant(s) autre(s) que la (les) cétone(s) en une quantité totale minoritaire en poids, par rapport au poids total du solvant, par exemple en une quantité de 0,1% à 20% en poids, de préférence de 5% à 15% en poids, par rapport au poids total du solvant, afin d'optimiser les propriétés des encres. Ces solvants minoritaires pourront être choisis parmi les esters, les éthers d'éthylèneglycol ou de propylèneglycol, et les acétals.

Outre le colorant appartenant à la famille des colorants anthraquinones, qui est toujours présent, la composition d'encre selon l'invention peut éventuellement comprendre un ou plusieurs autres colorant(s) et/ou pigment(s) qui n'appartiennent pas à la famille des colorants anthraquinones.

Ce ou ces autre(s) colorant(s) et/ou pigment(s) peut(vent) être choisi(s) parmi tous les colorants ou pigments convenant à l'usage recherché, connus de l'homme du métier, certains de ces pigments ou colorants ont déjà été cités plus haut.

On choisira généralement les autres colorants et les autres pigments parmi les colorants et pigments connus sous la dénomination de « C. I. Solvent Dyes » et « C. I. Pigments ».

A titre d'exemple, des pigments et colorants les plus courants, on peut citer les C.I. Solvent Black 3, C.I. Solvent Black 7, C. I. Solvent Black 29, C. I. Solvent Black 27, C. I. Solvent Black 28, C. I. Solvent Black 35, C. I. Solvent Blue 45, C. I. Solvent Blue 70, C. I. Solvent Red 124, les dispersions de Pigment Blue 60, de Pigment Black 7, de Pigment White 6, ou de Pigment Blue 15 ; ou encore les colorants fluorescents ; et les azurants optiques.

Les pigments incluent aussi les laques.

Avantageusement, le ou les autres colorant(s) est (sont) choisi(s) parmi les colorants organiques solubles dans les cétones.

Avantageusement, le ou les autres pigment(s) peuvent être choisi(s) parmi les noirs de carbone, les oxydes de titane, et leurs mélanges.

Un autre colorant préféré est le C.I. Solvent Black 3.

Selon un mode de réalisation particulièrement préféré de la composition d'encre selon l'invention, celle-ci comprend un colorant appartenant à la famille des colorants anthraquinones qui est d'une première couleur par exemple de couleur bleue, et un autre colorant et/ou pigment n'appartenant pas à la famille des colorants anthraquinones qui est d'une deuxième couleur, différente de la première couleur, par exemple de couleur noire.

Ainsi, l'encre selon l'invention peut comprendre en tant que colorant appartenant à la famille des colorants anthraquinones, le colorant Solvent Blue 104 et en tant qu'autre colorant, le colorant Solvent Black 3.

Lorsque cette composition d'encre est utilisée pour marquer un substrat, elle donne des marquages qui sont généralement de la deuxième couleur. Si ces marquages sont aspergés par un solvant pour les effacer et les remplacer par d'autres, par exemple à des fins frauduleuses, ils ne seront pas effacés comme tous les marquages réalisés avec les compositions d'encre selon l'invention, ils resteront toujours lisibles et garderont la première couleur, à savoir la couleur du colorant appartenant à la famille des colorants anthraquinones. Par exemple, le marquage initialement de couleur noire sera de couleur bleue après aspersion avec un solvant.

Ainsi, non seulement le marquage initial demeure toujours lisible et n'est pas effacé mais le changement de couleur du marquage signale la tentative frauduleuse d'effacement.

Lorsque la composition d'encre selon l'invention, comprend un colorant appartenant à la famille des colorants anthraquinones qui est d'une première couleur par exemple de couleur bleue, et un autre colorant et/ou pigment n'appartenant pas à la famille des colorants anthraquinones qui est d'une deuxième couleur, différente de la première couleur, par exemple de couleur noire, le liant est de préférence constitué par une résine cellulosique, telle qu'une résine d'acétobutyrate de cellulose qui donne les meilleurs résultats en termes de lisibilité des marquages après dissolution et de transfert de l'encre dans le substrat.

La quantité totale de colorant(s) et/ou de pigment(s) y compris le colorant appartenant à la famille des colorants anthraquinones, est généralement de 0,05% à 25% en poids, de préférence, de 1% à 20% en poids, de préférence encore de 3% à 10% en poids, du poids total de la composition d'encre.

La composition d'encre selon l'invention peut, en outre, éventuellement, comprendre au moins un sel de conductivité.

En effet, la composition d'encre selon l'invention étant applicable par jet continu dévié, elle doit avoir une conductivité électrique suffisante généralement supérieure ou égale à 300 µS/cm à 20°C, de préférence supérieure ou égale à 500 µS/cm à 20°C.

La conductivité de la composition d'encre selon l'invention pourra être par exemple de 300 à 5000 µS/cm à 20°C, notamment de 500 à 2000 µS/cm à 20°C.

Les produits apportant à l'encre la conductivité nécessaire à la projection par jet continu sont des composés ionisables, tels que les sels. Il est possible que des colorants, pigments, ou d'autres ingrédients de l'encre soient eux-mêmes des sels et donnent suffisamment de conductivité à l'encre pour qu'il n'y ait pas besoin d'y ajouter de sel de conductivité proprement dit : c'est le cas notamment des composés connus sous la dénomination « C. I. Solvent Black 27, 29, 35 et 45 », déjà cités.

Cependant, il sera souvent nécessaire d'inclure, dans la composition d'encre, un sel de conductivité différent des colorants, pigments et autres ingrédients.

Ainsi, la composition d'encre selon l'invention peut comprendre, en outre, au moins un sel de conductivité.

Par « sel de conductivité », on entend un sel qui apporte de la conductivité électrique à la composition d'encre.

Ce(s) sel de conductivité est (sont) généralement choisi(s) parmi les sels de métaux alcalins, les sels de métaux alcalino-terreux, les sels d'ammoniums simple, et les sels d'ammoniums quaternaires. Ces sels peuvent être sous la forme de nitrates, de thiocyanates, de formiates, d'acétates, de sulfates, de propionates, d'hexafluorophosphates, d'hexafluoroantimonates etc.

Lorsque les marquages obtenus avec la composition d'encre doivent être résistant à l'eau, on choisira ce ou ces sels de conductivité parmi ceux qui sont insolubles dans l'eau (c'est à dire généralement, dont la solubilité dans l'eau est inférieure à 0,5% en poids), comme les ammoniums quaternaires à chaîne grasse et les hexafluorophosphates ou hexafluroantimonates.

Ce(s) sel(s) de conductivité sera (seront) donc présent(s), si nécessaire, dans la composition d'encre de manière à communiquer à l'encre la conductivité ci-dessus, à raison généralement d'au moins 0,05% en poids, de préférence de 0,1% à 20% en poids, de préférence encore de 0,1% à 10% en poids, et mieux de 0,1% à 5% en poids, du poids total de la composition d'encre.

La composition selon l'invention peut, en outre, comprendre un ou plusieurs additif(s) choisi(s) notamment parmi les composés qui améliorent la solubilité de certains de ces composants, la qualité d'impression, l'adhérence, ou encore le contrôle du mouillage de l'encre sur différents supports.

Le ou les additif(s) pourra(pourront) être choisi(s), par exemple, parmi les agents anti-mousse ; les stabilisants chimiques ; les stabilisants UV ; les agents tensio-actifs, tels que le Fluorad^{®} FC 430 ou le Byk^{®} 333 ; les agents inhibant la corrosion par les sels en particulier par les sels de conductivité ; les bactéricides, les fongicides et les biocides ; et les tampons régulateurs de pH, etc.

Le ou les additif(s) est (sont) utilisé(s) à des doses très faibles, en général inférieures ou égales à 5 % et parfois aussi faibles que 0,01 % en poids, selon qu'il s'agisse des anti-mousse, des stabilisants ou des tensio-actifs.

L'invention concerne, en outre, un procédé de marquage d'un substrat, support, ou objet par projection sur une surface de ce substrat, support, ou objet d'une composition d'encre par la technique du jet continu dévié, dans lequel la composition d'encre projetée est la composition d'encre selon l'invention telle que décrite dans ce qui précède.

Généralement, préalablement à la projection de la composition d'encre, on ne soumet la surface du substrat, support, ou objet, à aucun traitement de surface autre qu'un simple nettoyage. Autrement dit, on ne soumet la surface à aucun traitement d'activation.

L'invention a trait aussi à un substrat, support, ou objet pourvu d'un marquage obtenu par séchage, et/ou absorption dans le substrat, support, ou objet, de la composition d'encre selon l'invention.

Ce substrat peut être poreux ou non-poreux.

Ce substrat peut être en métal, par exemple, en aluminium, en acier ; en verre ; en céramique ; en un matériau contenant de la cellulose, tel que du papier éventuellement couché ou glacé, du carton ou du bois ; en polymère organique, notamment en polymère thermoplastique, choisi de préférence parmi les PVC, les PET, les polyoléfines, telles que les polyéthylènes (PE), et les polypropylènes (PP) ; en Poly(Méthacrylate de Méthyle) PMMA aussi appelé « Plexiglas » ; en tissu ; ou en toute autre substance non poreuse ou poreuse ; ou en composite de plusieurs des matériaux précédents.

Un substrat préféré est un substrat en polyoléfine, par exemple en polyéthylène ou en polypropylène.

Le substrat, ou plutôt la surface du substrat, pourvue du marquage, peut avoir une forme quelconque, même complexe, il peut s'agir notamment d'une surface courbe par exemple de la surface d'un emballage ou récipient, tel qu'une bouteille, ou de la surface d'un bouchon.

On obtient des marquages, des impressions d'excellente qualité et résistants sur tous les substrats, même très peu poreux, en particulier sur des substrats en polyoléfines, par exemple en polyéthylène ou en polypropylène, même de formes complexes tels que des emballages ou récipients tels que des bouteilles ; ou des bouchons ; notamment en une polyoléfine, par exemple en un polyéthylène ou en un polypropylène.

L'invention a trait en outre à l'utilisation de la combinaison d'un liant comprenant au moins une résine liante, d'au moins un plastifiant de ladite résine liante, et d'au moins un colorant appartenant à la famille des colorants anthraquinones, dans une composition d'encre pour l'impression par jet continu dévié, liquide à la température ambiante, pour provoquer la migration dudit au moins un colorant appartenant à la famille des colorants anthraquinones dans un support sur une surface duquel la composition d'encre est appliquée.

L'invention concerne également l'utilisation de la combinaison d'un liant comprenant au moins une résine liante, d'au moins un plastifiant de ladite résine liante, et d'au moins un colorant appartenant à la famille des colorants anthraquinones, dans une composition d'encre pour l'impression par jet continu dévié, liquide à la température ambiante, pour préparer un marquage résistant à l'effacement par dissolution avec un solvant, tel qu'un solvant organique.

Dans certains aspects, la présente invention concerne :
Aspect 1 : Composition d'encre pour l'impression par jet continu dévié, liquide à la température ambiante, comprenant :
   a) un solvant comprenant, de préférence constitué par, un ou plusieurs composé(s) solvant(s) organiques, et éventuellement de l'eau;
   b) un liant, comprenant au moins une résine liante ;
   c) au moins un plastifiant de ladite résine liante ;
   d) au moins un colorant qui appartient à la famille des colorants anthraquinones ;
   e) éventuellement, au moins un ou plusieurs autres colorant(s) et/ou pigment(s) qui n'appartiennent pas à la famille des colorants anthraquinones.
Aspect 2 : Composition d'encre selon l'aspect 1, dans laquelle la résine liante est choisie parmi les résines (méth)acryliques, vinyliques, cétoniques, hydroxyaromatiques, cellulosiques, styrèniques, époxy, polyuréthanes, styrène-acrylates, alcoxysilanes, esters, et les combinaisons de deux ou plus de celles-ci ; de préférence, la résine liante est choisie parmi les résines cellulosiques, polyuréthanes, vinyliques, et les combinaisons de deux ou plus de celles-ci.
Aspect 3 : Composition d'encre selon l'un des aspects 1 ou 2, dans laquelle le liant représente de 0,1 à 50% en poids, de préférence de 1% à 45% en poids, de préférence encore de 5% à 30% en poids, mieux de 10% à 20% en poids, du poids total de la composition d'encre.
Aspect 4 : Composition d'encre selon l'un des aspects 1 à 3, dans laquelle le plastifiant est choisi parmi les polyuréthanes thermoplastiques, les phtalates, les adipates, les esters tels que les citrates, comme les citrates de trialkyle, par exemple le citrate de tributyle, les phosphates d'alkyle, le glycérol, l'acide lactique, l'acide oléique, le polypropylène glycol, les triglycérides d'acides gras, l'acide lévulinique ; les carbamates ou résines carbamiques ; et leurs mélanges ; de préférence, le plastifiant est choisi parmi les polyuréthanes thermoplastiques, les esters, les carbamates, et leurs mélanges.
Aspect 5 : Composition d'encre selon l'un des aspects 1 à 4, dans laquelle le ou les plastifiant(s) est(sont) présent(s) à raison d'au moins 0,05% en poids, de préférence de 0,1% à 20% en poids, du poids total de la composition d'encre.
Aspect 6 : Composition d'encre selon l'un des aspects 1 à 5, dans laquelle le colorant appartenant à la famille des colorants anthraquinones, est choisi parmi le C. I. Solvent Blue 36, le C.I.Solvent Blue 45, le C. I. Solvent Blue 104, et leurs mélanges ; de préférence, le colorant appartenant à la famille des anthraquinones est le C.I. Solvant Blue 104.
Aspect 7 : Composition d'encre selon l'un des aspects 1 à 6, comprenant de 0,01% à 5% en poids, de préférence de 0,01% à 2% en poids du au moins un colorant appartenant à la famille des anthraquinones.
Aspect 8 : Composition d'encre selon selon l'un des aspects 1 à 7, dans laquelle ledit ou lesdits autre(s) colorant(s) et/ou pigment(s) est(sont) choisi(s) parmi les colorants et pigments connus sous la dénomination de « C. I. Solvent Dyes » et « C. I. Pigments », tels que les C.I. Solvent Black 3, C. I. Solvent Black 29, C. I. Solvent Black 27, C. I. Solvent Black 7, C. I. Solvent Black 28, C. I. Solvent Black 35, C. I. Solvent Blue 45, C. I. Solvent Blue 70, C. I. Solvent Red 124, les dispersions de Pigment Blue 60, de Pigment Blue 15, de Pigment Black 7, ou de Pigment White 6 ; les colorants fluorescents ; et les azurants optiques.
Aspect 9 : Composition d'encre selon l'un des aspects 1 à 8, comprenant un colorant appartenant à la famille des colorants anthraquinones qui est d'une première couleur par exemple de couleur bleue, et un autre colorant et/ou pigment n'appartenant pas à la famille des colorants anthraquinones qui est d'une deuxième couleur, différente de la première couleur, par exemple de couleur noire ; de préférence le colorant appartenant à la famille des colorants anthraquinones est le colorant Solvent Blue 104, et l'autre colorant est le colorant Solvent Black 3.
Aspect 10 : Composition d'encre selon l'aspect 9, dans laquelle le liant est constitué par une résine cellulosique, telle qu'une résine d'acétobutyrate de cellulose.
Aspect 11 : Composition d'encre selon l'un des aspects 1 à 11, dans laquelle la quantité totale de colorant(s) et/ou de pigment(s) y compris le colorant appartenant à la famille des colorants anthraquinones, est de 0,05% à 25% en poids, de préférence, de 1% à 20% en poids, de préférence encore de 3% à 10% en poids, du poids total de la composition d'encre.
Aspect 12 : Composition d'encre selon l'un des aspects 1 à 11 comprenant moins de 10% en poids, de préférence moins de 5% en poids, de préférence encore moins de 1% en poids, et mieux 0% en poids d'eau, par rapport au poids total de la composition d'encre.
Aspect 13: Composition d'encre selon l'un des aspects 1 à 12, dans laquelle le solvant représente au moins 20% en poids du poids total de la composition d'encre, de préférence le solvant représente de 30% à 90% en poids, de préférence encore de 60% à 80% en poids, du poids total de la composition d'encre.
Aspect 14: Composition d'encre selon l'un des aspects 1 à 13, dans laquelle le ou lesdits composé(s) solvant(s) organique(s) comprend(comprennent) une proportion majoritaire en poids, par rapport au poids total du solvant, d'un ou plusieurs composé(s) solvant(s) organique(s) volatil(s), et une proportion minoritaire en poids, par rapport au poids total du solvant, d'un ou plusieurs composé(s) solvant(s) organique(s) non volatil(s) ; de préférence, le solvant est constitué par un ou plusieurs composé(s) solvant(s) organique(s) volatil(s).
Aspect 15: Composition d'encre selon l'un des aspects 1 à 14, dans laquelle le solvant comprend une quantité majoritaire en poids, par rapport au poids total du solvant, de préférence est constitué, d'un ou plusieurs composé(s) solvant(s) choisi(s) parmi les cétones de 3 à 10 atomes de carbone, telles que l'acétone, la butanone (méthyl-éthyl-cétone ou MEK), la pentanone-2 (méthyl-propyl-cétone), la méthyl-3 butanone-2 (méthyl-isopropylcétone), et la méthyl-4 pentanone-2 (méthyl-isobutyl-cétone ou MIK).
Aspect 16 : Composition d'encre selon l'aspect 15, comprenant en outre un ou plusieurs autres composé(s) solvant(s) autres que la (les) cétone(s) en une quantité totale minoritaire en poids par rapport au poids total du solvant, par exemple en une quantité de 0,1% à 20% en poids, de préférence de 5% à 15% en poids par rapport au poids total du solvant.
Aspect 17 : Composition d'encre selon l'un des aspects 1 à 16, qui a une conductivité électrique supérieure ou égale à 300 µS/cm à 20°C, de préférence supérieure ou égale à 500 µS/cm à 20°C.
Aspect 18 : Composition d'encre selon l'un des aspects 1 à 17, comprenant en outre au moins un sel de conductivité, choisi de préférence parmi les sels de conductivité insolubles dans l'eau.
Aspect 19 : Composition selon l'aspect 18, dans laquelle le(s) sel(s) de conductivité est (sont) présent(s) à raison d'au moins 0,05% en poids, de préférence à raison de 0,1% à 20% en poids, de préférence encore de 0,1% à 10% en poids, mieux de 0,1% à 5% en poids, du poids total de la composition d'encre.
Aspect 20 : Composition d'encre selon l'un des aspects 1 à 19, comprenant, en outre, un ou plusieurs additif(s) choisi(s) parmi les agents anti-mousse ; les stabilisants chimiques ; les stabilisants UV ; les agents tensio-actifs ; les agents inhibant la corrosion par les sels ; les bactéricides, les fongicides et les biocides ; et les tampons régulateurs de pH.
Aspect 21 : Procédé de marquage d'un substrat, support ou objet par projection sur une surface de ce substrat, support, ou objet d'une composition d'encre par la technique du jet continu dévié, dans lequel la composition d'encre projetée est la composition d'encre selon l'un des aspects 1 à 20.
Aspect 22: Procédé selon l'aspect 21, dans lequel, préalablement à la projection de la composition d'encre, on ne soumet la surface du substrat, support, ou objet, à aucun traitement de surface autre qu'un simple nettoyage.
Aspect 23 : Substrat, support, ou objet pourvu d'un marquage obtenu par séchage, et/ou absorption dans le substrat, support, ou objet, de la composition d'encre selon l'un des aspects 1 à 20.
Aspect 24 : Substrat, support ou objet, selon l'aspect 23 qui est en métal, par exemple, en aluminium, en acier ; en verre ; en céramique ; en un matériau contenant de la cellulose, tel que du papier éventuellement couché ou glacé, du carton ou du bois ; en polymère organique, notamment en polymère thermoplastique, choisi de préférence parmi les PVC, les PET, les polyoléfines, telles que les polyéthylènes (PE), et les polypropylènes (PP) ; en Poly(Méthacrylate de Méthyle) PMMA aussi appelé « Plexiglas » ; en tissu ; ou en toute autre substance non poreuse ou poreuse ; ou en composite de plusieurs des matériaux précédents.
Aspect 25 : Substrat, support ou objet selon l'aspect 24, qui est un emballage ou un récipient, tel qu'une bouteille ; ou un bouchon ; notamment en une polyoléfine, par exemple en un polyéthylène ou en un polypropylène.
Aspect 26 : Utilisation de la combinaison d'un liant comprenant au moins une résine liante, d'au moins un plastifiant de ladite résine liante, et d'au moins un colorant appartenant à la famille des colorants anthraquinones, dans une composition d'encre pour l'impression par jet continu dévié, liquide à la température ambiante, pour provoquer la migration dudit au moins un colorant appartenant à la famille des colorants anthraquinones dans un support sur une surface duquel la composition d'encre est appliquée.
Aspect 27 : Utilisation de la combinaison d'un liant comprenant au moins une résine liante, d'au moins un plastifiant de ladite résine liante, et d'au moins un colorant appartenant à la famille des colorants anthraquinones, dans une composition d'encre pour l'impression par jet continu dévié, liquide à la température ambiante, pour préparer un marquage résistant à l'effacement pas dissolution avec un solvant, tel qu'un solvant organique.

### EXPOSÉ DÉTAILLÉ DE MODES DE RÉALISATION PARTICULIERS

L'invention sera mieux comprise à la lecture de la description suivante de modes de réalisation de l'invention, donnés à titre d'exemples illustratifs et non limitatifs.

### EXEMPLES :

Les compositions d'encres suivantes ont été préparées en mélangeant les produits mentionnés dans le tableau I ci-dessous, dans les proportions indiquées.

Les compositions d'encre préparées sont des compositions d'encre selon l'invention (Compositions des Exemples N°1, N°2, et N°3), et une composition d'encre comparative non conforme à l'invention (composition de l'exemple comparatif).

Les viscosités et les conductivités des encres obtenues sont également données dans la Tableau I ci-dessous.

**Tableau I**

| **Constituants** (pourcentages en masse) | **Exemple comparatif** | **Exemple N°1** | **Exemple N°2** | **Exemple N°3** |
|---|---|---|---|---|
| Méthyl-éthyl cétone | **89,1** | **78,95** | **79,45** | **79,45** |
| Résine cellulosique ( acétobutyrate de cellulose CAB553.04) | **5,4** | **3,23** | **4,5** | **4,5** |
| Résine polyuréthane (Unithane^{®} 672S65) | | **12,93** | | |
| Citrate de tributyle | | | **11,5** | |
| Résine carbamique (Resamine^{®} HF480) | | | | **11,5** |
| Solvent Black 3 | **3,9** | **3,45** | **3,2** | **3,2** |
| Solvent blue 104 | **0,5** | **0,48** | **0,45** | **0,45** |
| Hexafluorophosphate de tétrabutylammonium | **1,1** | **0,96** | **0,9** | **0,9** |
| Viscosité (mPa.s) | 4,8 | 4,6 | 4,3 | 4,6 |
| Conductivité (µS/cm) | 844 | 840 | 802 | 770 |

| | | | | |
|---|---|---|---|---|
| - CAB553.04 fabriqué par la société Eastman^{®}. - Unithane^{®} 672S65 fabriqué par la société Ernisunion^{®}. - Resamine^{®} HF480 fabriqué par la société Allnex^{®}. | | | | |

Les encres ainsi préparées ont été déposées à l'aide d'imprimantes Markem-Imaje^{®} 9040, qui utilisent la technique de l'impression par jet continu dévié, sur des flacons en polyéthylène. Des marquages ont ainsi été obtenus sur ces flacons.

Après 4 heures et 24 heures de séchage, les marquages sur ces flacons en polyéthylène ont été aspergés de méthyléthylcétone pour dissoudre complètement le marquage.

Après dissolution des marquages, on observe la lisibilité résiduelle.

Les exemples 1, 2 et 3 selon l'invention montrent une lisibilité et un transfert d'encre dans le support bien plus importants que l'exemple comparatif qui ne contient pas de plastifiant.

## Revendications

1. Composition d'encre pour l'impression par jet continu dévié, liquide à la température ambiante, comprenant :
a) un solvant comprenant, de préférence constitué par, un ou plusieurs composé(s) solvant(s) organiques, et éventuellement de l'eau;
b) un liant, comprenant au moins une résine liante ;
c) au moins un plastifiant de ladite résine liante ;
d) au moins un colorant qui appartient à la famille des colorants anthraquinones et choisi parmi le C. I. Solvent Blue 36, le C.I.Solvent Blue 45, le C. I. Solvent Blue 104, et leurs mélanges ; de préférence, le colorant appartenant à la famille des anthraquinones est le C.I. Solvant Blue 104;
e) éventuellement, au moins un ou plusieurs autres colorant(s) et/ou pigment(s) qui n'appartiennent pas à la famille des colorants anthraquinones.

2. Composition d'encre selon la revendication 1, dans laquelle la résine liante est choisie parmi les résines (méth)acryliques, vinyliques, cétoniques, hydroxyaromatiques, cellulosiques, styrèniques, époxy, polyuréthanes, styrène-acrylates, alcoxysilanes, esters, et les combinaisons de deux ou plus de celles-ci ; de préférence, la résine liante est choisie parmi les résines cellulosiques, polyuréthanes, vinyliques, et les combinaisons de deux ou plus de celles-ci.

3. Composition d'encre selon l'une quelconque des revendications précédentes, dans laquelle le liant représente de 0,1 à 50% en poids, de préférence de 1% à 45% en poids, de préférence encore de 5% à 30% en poids, mieux de 10% à 20% en poids, du poids total de la composition d'encre.

4. Composition d'encre selon l'une quelconque des revendications précédentes, dans laquelle le plastifiant est choisi parmi les polyuréthanes thermoplastiques, les phtalates, les adipates, les esters tels que les citrates, comme les citrates de trialkyle, par exemple le citrate de tributyle, les phosphates d'alkyle, le glycérol, l'acide lactique, l'acide oléique, le polypropylène glycol, les triglycérides d'acides gras, l'acide lévulinique ; les carbamates ou résines carbamiques ; et leurs mélanges ; de préférence, le plastifiant est choisi parmi les polyuréthanes thermoplastiques, les esters, les carbamates, et leurs mélanges.

5. Composition d'encre selon l'une quelconque des revendications précédentes, dans laquelle le ou les plastifiant(s) est(sont) présent(s) à raison d'au moins 0,05% en poids, de préférence de 0,1% à 20% en poids, du poids total de la composition d'encre.

6. Composition d'encre selon l'une quelconque des revendications précédentes, comprenant de 0,01% à 5% en poids, de préférence de 0,01% à 2% en poids du au moins un colorant appartenant à la famille des anthraquinones.

7. Composition d'encre selon l'une quelconque des revendications précédentes, dans laquelle ledit ou lesdits autre(s) colorant(s) et/ou pigment(s) est(sont) choisi(s) parmi les colorants et pigments connus sous la dénomination de « C. I. Solvent Dyes » et « C. I. Pigments », tels que les C.I. Solvent Black 3, C. I. Solvent Black 29, C. I. Solvent Black 27, C. I. Solvent Black 7, C. I. Solvent Black 28, C. I. Solvent Black 35, C. I. Solvent Blue 45, C. I. Solvent Blue 70, C. I. Solvent Red 124, les dispersions de Pigment Blue 60, de Pigment Blue 15, de Pigment Black 7, ou de Pigment White 6 ; les colorants fluorescents ; et les azurants optiques.

8. Composition d'encre selon l'une quelconque des revendications précédentes, comprenant un colorant appartenant à la famille des colorants anthraquinones qui est d'une première couleur par exemple de couleur bleue, et un autre colorant et/ou pigment n'appartenant pas à la famille des colorants anthraquinones qui est d'une deuxième couleur, différente de la première couleur, par exemple de couleur noire ; de préférence le colorant appartenant à la famille des colorants anthraquinones est le colorant Solvent Blue 104, et l'autre colorant est le colorant Solvent Black 3.

9. Composition d'encre selon la revendication 8, dans laquelle le liant est constitué par une résine cellulosique, telle qu'une résine d'acétobutyrate de cellulose.

10. Composition d'encre selon l'une quelconque des revendications précédentes, dans laquelle la quantité totale de colorant(s) et/ou de pigment(s) y compris le colorant appartenant à la famille des colorants anthraquinones, est de 0,05% à 25% en poids, de préférence, de 1% à 20% en poids, de préférence encore de 3% à 10% en poids, du poids total de la composition d'encre.

11. Composition d'encre selon l'une quelconque des revendications précédentes, comprenant moins de 10% en poids, de préférence moins de 5% en poids, de préférence encore moins de 1% en poids, et mieux 0% en poids d'eau, par rapport au poids total de la composition d'encre.

12. Composition d'encre selon l'une quelconque des revendications précédentes, dans laquelle le solvant représente au moins 20% en poids du poids total de la composition d'encre, de préférence le solvant représente de 30% à 90% en poids, de préférence encore de 60% à 80% en poids, du poids total de la composition d'encre.

13. Composition d'encre selon l'une quelconque des revendications précédentes, dans laquelle le ou lesdits composé(s) solvant(s) organique(s) comprend(comprennent) une proportion majoritaire en poids, par rapport au poids total du solvant, d'un ou plusieurs composé(s) solvant(s) organique(s) volatil(s), et une proportion minoritaire en poids, par rapport au poids total du solvant, d'un ou plusieurs composé(s) solvant(s) organique(s) non volatil(s) ; de préférence, le solvant est constitué par un ou plusieurs composé(s) solvant(s) organique(s) volatil(s).

14. Composition d'encre selon l'une quelconque des revendications précédentes, dans laquelle le solvant comprend une quantité majoritaire en poids, par rapport au poids total du solvant, de préférence est constitué, d'un ou plusieurs composé(s) solvant(s) choisi(s) parmi les cétones de 3 à 10 atomes de carbone, telles que l'acétone, la butanone (méthyl-éthyl-cétone ou MEK), la pentanone-2 (méthyl-propyl-cétone), la méthyl-3 butanone-2 (méthyl-isopropylcétone), et la méthyl-4 pentanone-2 (méthyl-isobutyl-cétone ou MIK).

15. Composition d'encre selon la revendication 14, comprenant en outre un ou plusieurs autres composé(s) solvant(s) autres que la (les) cétone(s) en une quantité totale minoritaire en poids par rapport au poids total du solvant, par exemple en une quantité de 0,1% à 20% en poids, de préférence de 5% à 15% en poids par rapport au poids total du solvant.

16. Composition d'encre selon l'une quelconque des revendications précédentes, qui a une conductivité électrique supérieure ou égale à 300 µS/cm à 20°C, de préférence supérieure ou égale à 500 µS/cm à 20°C.

17. Composition d'encre selon l'une quelconque des revendications précédentes, comprenant en outre au moins un sel de conductivité, choisi de préférence parmi les sels de conductivité insolubles dans l'eau.

18. Composition selon la revendication 17, dans laquelle le(s) sel(s) de conductivité est (sont) présent(s) à raison d'au moins 0,05% en poids, de préférence à raison de 0,1% à 20% en poids, de préférence encore de 0,1% à 10% en poids, mieux de 0,1% à 5% en poids, du poids total de la composition d'encre.

19. Composition d'encre selon l'une quelconque des revendications précédentes, comprenant, en outre, un ou plusieurs additif(s) choisi(s) parmi les agents anti-mousse ; les stabilisants chimiques les stabilisants UV ; les agents tensio-actifs ; les agents inhibant la corrosion par les sels ; les bactéricides, les fongicides et les biocides ; et les tampons régulateurs de pH.

20. Procédé de marquage d'un substrat, support ou objet par projection sur une surface de ce substrat, support, ou objet d'une composition d'encre par la technique du jet continu dévié, dans lequel la composition d'encre projetée est la composition d'encre selon l'une quelconque des revendications 1 à 19.

21. Procédé selon la revendication 20, dans lequel, préalablement à la projection de la composition d'encre, on ne soumet la surface du substrat, support, ou objet, à aucun traitement de surface autre qu'un simple nettoyage.

22. Substrat, support, ou objet pourvu d'un marquage obtenu par séchage, et/ou absorption dans le substrat, support, ou objet, de la composition d'encre selon l'une quelconque des revendications 1 à 19.

23. Substrat, support ou objet, selon la revendication 22 qui est en métal, par exemple, en aluminium, en acier; en verre ; en céramique ; en un matériau contenant de la cellulose, tel que du papier éventuellement couché ou glacé, du carton ou du bois ; en polymère organique, notamment en polymère thermoplastique, choisi de préférence parmi les PVC, les PET, les polyoléfines, telles que les polyéthylènes (PE), et les polypropylènes (PP) ; en Poly(Méthacrylate de Méthyle) PMMA aussi appelé « Plexiglas » ; en tissu ; ou en toute autre substance non poreuse ou poreuse ; ou en composite de plusieurs des matériaux précédents.

24. Substrat, support ou objet selon la revendication 23, qui est un emballage ou un récipient, tel qu'une bouteille ; ou un bouchon ; notamment en une polyoléfine, par exemple en un polyéthylène ou en un polypropylène.

25. Utilisation de la combinaison d'un liant comprenant au moins une résine liante, d'au moins un plastifiant de ladite résine liante, et d'au moins un colorant appartenant à la famille des colorants anthraquinones, dans une composition d'encre pour l'impression par jet continu dévié, liquide à la température ambiante, pour provoquer la migration dudit au moins un colorant appartenant à la famille des colorants anthraquinones dans un support sur une surface duquel la composition d'encre est appliquée.

26. Utilisation de la combinaison d'un liant comprenant au moins une résine liante, d'au moins un plastifiant de ladite résine liante, et d'au moins un colorant appartenant à la famille des colorants anthraquinones, dans une composition d'encre pour l'impression par jet continu dévié, liquide à la température ambiante, pour préparer un marquage résistant à l'effacement pas dissolution avec un solvant, tel qu'un solvant organique.
